(19) Europäisches Patentamt
European Patent Office
Office européen des brevets

(11) **EP 4 618 057 A1**

(12) **EUROPEAN PATENT APPLICATION**
published in accordance with Art. 153(4) EPC

(43) Date of publication:
**17.09.2025 Bulletin 2025/38**

(21) Application number: **23896007.4**

(22) Date of filing: **29.06.2023**

(51) International Patent Classification (IPC):
**G08G 1/14** (2006.01)

(52) Cooperative Patent Classification (CPC):
**B62D 1/00; B62D 15/0285; G01C 21/34; G08G 1/14**

(86) International application number:
**PCT/CN2023/104210**

(87) International publication number:
**WO 2024/113843 (06.06.2024 Gazette 2024/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.11.2022 CN 202211521349**

(71) Applicant: **Shenzhen Yinwang Intelligent Technologies Co., Ltd.**
**Shenzhen, Guangdong 518129 (CN)**

(72) Inventors:
• **YUAN, Fang**
**Shenzhen, Guangdong 518129 (CN)**
• **NIE, Pin**
**Shenzhen, Guangdong 518129 (CN)**
• **MA, Ning**
**Xianning West Road Xi'an, Shaanxi 710049 (CN)**

(74) Representative: **Körber, Martin Hans**
**Mitscherlich PartmbB**
**Patent- und Rechtsanwälte**
**Karlstraße 7**
**80333 München (DE)**

(54) **AUTOMATED VALET PARKING METHOD IN PARKING LOT, AND RELEVANT APPARATUS**

(57)     A method for automated valet parking in a parking lot, an automated valet parking apparatus, a computer-readable storage medium, a computer program product, and a vehicle that are in the vehicle field are provided. A vacant parking space is allocated to a vehicle and a traveling route from a current location of the vehicle to a vacant parking space in the parking lot is planned. This solution helps avoid a detour and road congestion caused by searching for the vacant parking space in the parking lot by the vehicle, thereby helping improve parking efficiency of the vehicle in the parking lot.

FIG. 4

**Description**

This application claims priority to Chinese Patent Application No. 202211521349.0, filed with the China National Intellectual Property Administration on November 30, 2022 and entitled "METHOD FOR AUTOMATED VALET PARKING IN PARKING LOT AND RELATED APPARATUS", which is incorporated herein by reference in its entirety.

**TECHNICAL FIELD**

This application relates to the field of intelligent driving, and in particular, to a method for automated valet parking in a parking lot, an automated valet parking apparatus, a computer-readable storage medium, a computer program product, a vehicle, and a parking system.

**BACKGROUND**

When a vehicle is parked in a parking lot with non-fixed parking spaces, for example, an airport parking lot, a commercial complex parking lot, or a parking lot with non-fixed parking spaces for vehicles, a parking method is as follows: Start searching for a vacant parking space from an entrance until the vacant parking space is found, and then park the vehicle into the parking space.

However, this parking method is prone to problems such as a long vehicle parking time due to a vehicle detour, and low traffic efficiency of the parking lot.

**SUMMARY**

This application provides a method for automated valet parking in a parking lot, a parking apparatus, a computer-readable storage medium, a computer program product, and a vehicle. This helps the vehicle avoid a detour in a parking lot, and thereby helping avoid road congestion and improve parking efficiency of the vehicle in the parking lot.

According to a first aspect, this application provides a method for parking in a parking lot, including: obtaining a first traveling route of a target vehicle from a first location to a first parking space in the parking lot, where the first parking space is a vacant parking space; and controlling, based on the first traveling route, the target vehicle to park from the first location into the first parking space.

In the method, the traveling route of the vehicle from the location to the vacant parking space is output for the vehicle, so that the vehicle can directly park based on the guided route. This helps prevent the vehicle from spending time searching for the vacant parking space, and also helps prevent the vehicle from taking a detour to search for the parking space, thereby helping reduce invalid traveling of the vehicle in the parking lot, helping avoid congestion in the parking lot, and finally helping improve traffic efficiency of the parking lot.

Optionally, the first location may be a location at which the vehicle enters the parking lot, for example, an entrance of the parking lot, or may be any location after the vehicle enters the parking lot.

In some possible implementations, the method further includes: obtaining an image captured by a camera deployed in the parking lot; and determining the first location based on a location of the camera in the parking lot and a location of the target vehicle in the image.

In this implementation, the location of the vehicle in the parking lot may be determined based on the image captured by the camera deployed in the parking lot, so that a parking route can be planned based on the location of the vehicle. Generally, there are cameras deployed in parking lots, and a method for determining a location of an object in an image based on a location of the camera and the image captured by the camera is mature. Therefore, in this implementation, an existing device and an existing method can be reused, to implement planning of the parking route, so that implementation costs of the solution can be reduced, and implementation efficiency of the solution can be improved.

In some possible implementations, a traveling distance of the first traveling route is a minimum traveling distance from the first location to the first parking space.

In this implementation, the parking route planned for the vehicle is a route with a shortest traveling distance, so that parking efficiency can be further improved.

In some possible implementations, the obtaining a first traveling route of a target vehicle from a first location to a first parking space in the parking lot includes: adding a control point that is in M control points in the parking lot and that is closest to the first location to a first set as a start control point, and adding other control points in the plurality of control points to a second set, where different control points in the plurality of control points indicate different locations on a road in the parking lot, a distance between two locations that are in a one-to-one correspondence with two adjacent control points in the plurality of control points is a preset value, and M is a positive integer; obtaining N second control points from the second set, where each second control point in the N second control points is adjacent to at least one control point in K third control points that are previously added to the first set, the K third control points do not include a control point whose distance from the first parking space meets a third preset condition, and N and K are positive integers; obtaining a sum of a distance from each of the K third control points to each adjacent second control point of the N second control points and a distance from the start control point to each of the third control points, to obtain a distance from the start control point to each adjacent second control point; when the N second control points include a second control point that meets the third preset condition, recording a distance from the start control point to the second control point that meets the third preset condition, to obtain a candidate distance; moving the N second control points from the second set to the first set; and repeating the first three steps until the second set is empty, and using a traveling route formed by all control points associated with a minimum distance in all candidate distances as the first traveling route.

In some possible implementations, the method further includes: receiving a parking requirement that is input by a user; and determining a location that is in the parking lot and that meets the parking requirement as a destination. The obtaining a first traveling route of a target vehicle from a first location to a first parking space in the parking lot includes: obtaining the first traveling route based on the destination, where a sum of the traveling distance of the first traveling route and a walking distance from the first parking space to the destination is less than a traveling distance from the first location to the destination through any vacant parking space in the parking lot.

In this implementation, the parking route of the vehicle in the parking lot is planned for the user based on the parking requirement of the user, so that the parking route that can meet the user requirement can be obtained. In comparison with a parking route that is not planned with reference to a user requirement, in this implementation, the vehicle can be further prevented from traveling in the parking lot for more time. Therefore, road congestion in the parking lot can be further avoided and traffic efficiency of the parking lot can be further improved.

In some possible implementations, the sum is a weighted sum of the traveling distance of the first traveling route and the walking distance, and a weight of the traveling distance of the first traveling route and a weight of the walking distance are preset values.

In this implementation, when the parking route that meets the parking requirement is planned for the vehicle, weight values of the traveling distance of the vehicle and the walking distance of the user are fully considered, so that traffic efficiency can be further improved.

In some possible implementations, the method further includes: obtaining first duration in which the target vehicle travels from the first location to the first parking space along the first traveling route; and outputting the first duration to the user.

In this implementation, the traveling duration of the vehicle when the vehicle travels along the guided parking route is calculated and output, so that the user properly arranges time of the user based on the traveling duration.

In some possible implementations, the obtaining first duration in which the target vehicle travels from the first location to the first parking space along the first traveling route includes: dividing the first traveling route into S sub-routes, where S is a positive integer; obtaining sub-duration in which the target vehicle travels along each of the S sub-routes; and determining the first duration based on the sub-duration in which the target vehicle travels along each of the S sub-routes.

In this implementation, the parking route may be divided into a plurality of sub-routes. In other words, S is greater than 1. Then, traveling duration on each sub-route is separately calculated, so that accuracy of a total traveling duration can be improved when the total traveling duration is calculated.

In some possible implementations, the obtaining sub-duration in which the target vehicle travels along each of the S sub-routes includes: obtaining a maximum instantaneous speed of the target vehicle on each sub-route; and determining, based on a length of each sub-route, the maximum instantaneous speed of the target vehicle on each sub-route, an instantaneous speed of a traveling vehicle ahead of the target vehicle traveling along each sub-route, a safe traveling distance in the parking lot, and vehicle acceleration in the parking lot, the sub-duration in which the target vehicle travels along each sub-route.

In this implementation, the duration on each sub-route is calculated based on the maximum instantaneous speed of the vehicle, the instantaneous speed of the traveling vehicle ahead, the safe traveling distance in the parking lot, and the vehicle acceleration in the parking lot, so that accuracy of the sub-duration on each sub-route can be improved, and accuracy of the total traveling duration can be improved.

In some possible implementations, the method further includes: obtaining a second traveling route from the first parking space to a first exit of the parking lot; and controlling, based on the second traveling route, the vehicle to travel from the first parking space to the first exit.

In this implementation, the traveling route along which the vehicle travels out of the parking lot from the current parking space may be further planned. This also helps avoid a detour of the vehicle, and further helps avoid congestion in the parking lot and improve traffic efficiency.

In some possible implementations, the method further includes: obtaining second duration in which the vehicle travels from the first parking space to the first exit along the second traveling route; and outputting the second duration to the user.

In this implementation, the traveling duration of the vehicle when the vehicle travels along the guided exiting route is calculated and output, so that the user properly arranges time of the user based on the traveling duration.

In some implementations, the method further includes: determining that traffic efficiency of the parking lot is greater than or equal to a traffic efficiency threshold.

In other words, one or more of the foregoing services may be provided for the vehicle only when the traffic efficiency of the parking lot is greater than or equal to the preset value, so that resources consumed by the foregoing services can be saved.

In some possible implementations, the determining that traffic efficiency of the parking lot is greater than or equal to a traffic efficiency threshold includes: when an occupancy rate of the parking lot is greater than or equal to a preset threshold, determining that the traffic efficiency of the parking lot is greater than or equal to the traffic efficiency threshold.

In this implementation, the traffic efficiency of the parking lot is determined based on the occupancy rate of the parking lot, so that accurate traffic efficiency of the parking lot can be efficiently obtained, and the traffic efficiency of the parking lot can be efficiently and timely improved.

In some implementations, the method further includes: obtaining a value of at least one of the following indicators: an average time for finding a parking space, an average detour time, an average congestion and determining time, a total detour distance, a total traveling distance, a quantity of served vehicles, a vehicle service rate, a quantity of vehicles that exit the parking lot with a detour, and a quantity of vehicles that do not enter the parking lot; and outputting the value of the at least one indicator to a manager of the parking lot.

In this implementation, these values of the indicators are output, so that a parking lot management party can timely and efficiently learn of a traffic status in the parking lot, and related personnel can determine effectiveness of the parking guidance service by using values of the indicators in different time periods.

In some possible implementations, the method further includes: obtaining a safe traveling speed and/or a safe traveling spacing in the parking lot. The controlling, based on the first traveling route, the vehicle to park from the first location into the first parking space includes: controlling, based on the first traveling route and the output safe traveling speed and/or the safe traveling spacing, the vehicle to park from the first location into the first parking space. In this implementation, traveling safety of the vehicle in the parking lot can be improved.

According to a second aspect, this application provides an apparatus for parking in a parking lot. The apparatus may include modules configured to implement the method according to any one of the implementations of the first aspect.

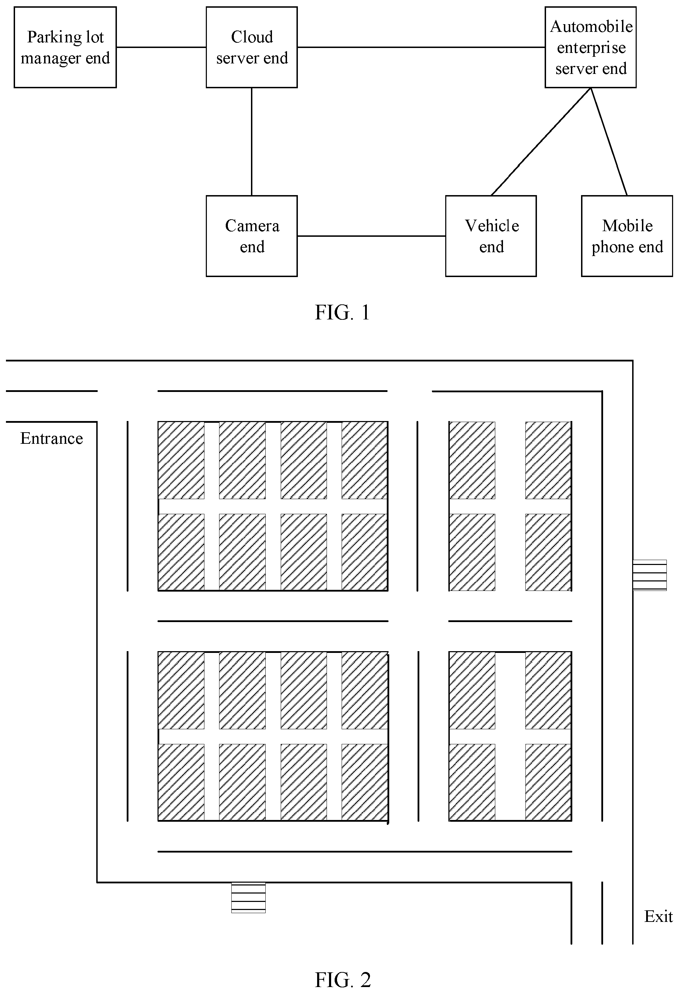

For example, the apparatus may include one or more of a cloud server end, an automobile enterprise server end, a vehicle end, and a mobile phone end that are deployed in FIG. 1.

According to a third aspect, this application provides an apparatus for parking in a parking lot. The apparatus may include a processor and a memory. The memory is configured to store computer-executable program code. The program code includes instructions. When the processor executes the instructions, the instructions enable the apparatus to perform the method according to any one of the implementations of the first aspect.

In this implementation, the apparatus may be a cloud server end, an automobile enterprise server end, a vehicle end, or a mobile phone end in FIG. 1, or may be a chip used in the cloud server end, the automobile enterprise server end, the vehicle end, or the mobile phone end in FIG. 1.

According to a fourth aspect, this application provides a computer program product including instructions. When the computer program product runs on a computer, the computer is enabled to perform the method according to any one of the possible implementations of the first aspect.

According to a fifth aspect, this application provides a computer-readable storage medium. The computer-readable storage medium stores instructions. When the instructions are run on an electronic device or a computer, the electronic device or the computer is enabled to perform the method according to any one of the possible implementations of the first aspect.

According to a sixth aspect, this application provides a vehicle. The vehicle includes the apparatus according to the second aspect or the third aspect.

**BRIEF DESCRIPTION OF DRAWINGS**

FIG. 1 is a diagram of a structure of an automated valet parking system according to an embodiment of this application;
FIG. 2 is a diagram of a map of a parking lot according to an embodiment of this application;
FIG. 3 is a diagram of a road topology according to an embodiment of this application;
FIG. 4 is a schematic flowchart of an automated valet parking method according to an embodiment of this application;
FIG. 5 is a schematic flowchart of an automated valet parking method according to another embodiment of this application;
FIG. 6 is a schematic flowchart of an automated valet parking method according to still another embodiment of this application;
FIG. 7 is a schematic flowchart of an automated valet parking method according to still another embodiment of this application;
FIG. 8 is a schematic flowchart of an automated valet parking method according to still another embodiment of this application;
FIG. 9 is a diagram of generating a vehicle event according to an embodiment of this application;
FIG. 10 is a schematic flowchart of an automated valet parking method according to still another embodiment of this application;
FIG. 11 is a diagram of a structure of an automated valet parking apparatus according to an embodiment of this application; and
FIG. 12 is a diagram of a structure of an automated valet parking apparatus according to another embo-

7      **EP 4 618 057 A1**      8

diment of this application.

## DESCRIPTION OF EMBODIMENTS

FIG. 1 is a diagram of a structure of an automated valet parking system according to an embodiment of this application. The automated valet parking system may also be referred to as an autonomous valet parking system. As shown in FIG. 1, the automated valet parking (automated valet parking, AVP) system includes a parking lot manager end, a cloud server end, an automobile enterprise server end, a vehicle end, a mobile phone end, and a camera end.

The parking lot manager end may be an application deployed on a computing device, or may be a computing device deployed with a management application.

The cloud server end may be a parking service deployed on a computing device, or may be a computing device on which a parking service is deployed.

Map information of a parking lot may be preset in the cloud server end. The map information includes an entrance, an exit, parking spaces, roads, a shopping mall entrance, an elevator entrance, a staircase entrance, an emergency exit entrance, and the like of a parking lot. The road may be classified into a straight and a bend. The bend may include an intersection, and the intersection may be further classified into a right-angle intersection, a T-intersection, and a crossroad.

FIG. 2 is a diagram of a map of a parking lot according to an embodiment of this application. In FIG. 2, a rectangle filled with diagonal lines indicates a parking space, a square filled with horizontal lines indicates an elevator, and a line indicates a lane line.

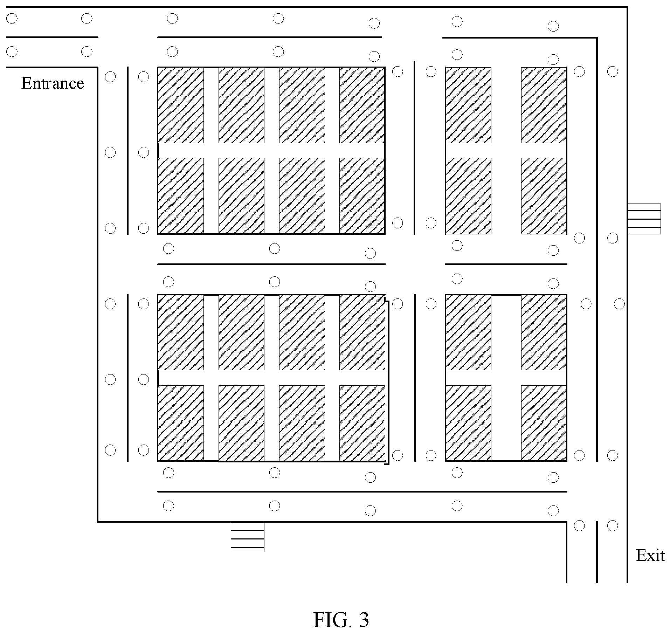

The cloud server end may set control points in the map based on a specific spacing distance, and record a distance between adjacent control points. An example diagram of a road structure including control points is shown as FIG. 3. In FIG. 3, a circle indicates a control point. Eight control points are set at the crossroad, and six control points are set at the T-intersection.

Optionally, information such as a quantity of parking spaces in the parking lot, a quantity of entrances and exits, a distance between the entrances and exits and a farthest parking space, a maximum vehicle speed of a vehicle in the parking lot, a safe traveling distance, acceleration, and deceleration may be further configured in the cloud server end.

The cloud server end may separately configure parameters for the parking space and the vehicle. For example, the parameter of the parking space may include a parking space status, where the parking space status may include idle, pre-occupied, occupied, pre-unlocked, and the like. The parameter of the vehicle may include a vehicle status, where the vehicle status may include entering, traveling, waiting, pre-parking, parking, pre-exiting, exiting, and the like. The cloud server end may further configure parameters such as parking time consumption, parking duration, and a vehicle size for the vehicle. The cloud server end may further configure, for the parking lot, parameters such as a parking space occupation rate and a distance between each exit and the farthest parking space.

The automobile enterprise server end may be a parking notification service deployed on an automobile enterprise server, or may be a computing device on which a parking notification service is deployed.

The vehicle end may be a parking prompt service deployed on a vehicle-mounted device, or may be a vehicle-mounted device on which a parking prompt service is deployed.

The mobile phone end may be a parking prompt service deployed on a mobile phone, or may be a mobile phone on which a parking prompt service is deployed. The mobile phone end in this application may also be a tablet computer (PC) or the like.

The camera end may be a service that is deployed on a camera or another computing device and that is configured to process image data, or may be a camera or another computing device on which an image data processing service is deployed.

The camera is deployed in the parking lot. In an example, one camera may be output every 20 meters on the road in the parking lot, and a location of the camera is marked on the map of the parking lot. In this way, not only real-time road condition information can be obtained based on an image captured by the camera, but also vehicle location information, road location information, and obstacle location information can be obtained based on a location of the camera and the captured image.

The camera may communicate with the parking lot end, the parking lot end may communicate with the cloud server end, the vehicle end may communicate with the automobile enterprise server end, and the mobile phone end may communicate with the automobile enterprise server end.

In this embodiment of this application, an association relationship is established among the mobile phone end, the vehicle end, and vehicle information, and the vehicle information may include a license plate number.

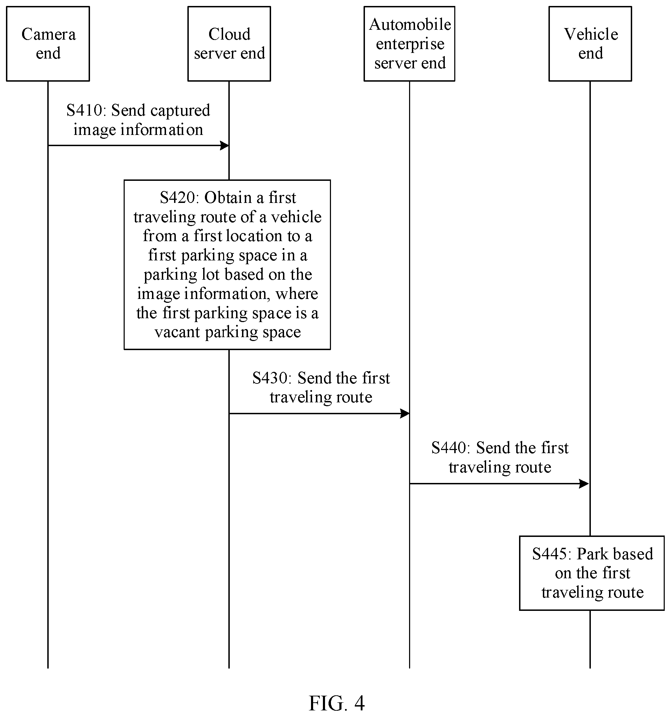

With reference to FIG. 4, the following describes an implementation of an automated valet parking method implemented by the parking system shown in FIG. 1. The parking method shown in FIG. 4 may include S410, S420, S430, and S440.

S410: A camera sends captured image information to a cloud server end, and correspondingly, the cloud server end receives the image information.

In an embodiment, the image information may include an image captured by the camera.

In another example, after capturing the image, the camera may decode and process the image to obtain one or more pieces of the following image information: a feature of a vehicle, a corner point of a license plate, a feature of an obstacle, a corner point of the obstacle, a

5

feature of a lane line, a corner point of the lane line, and a map constraint, so that the cloud server end can determine a location of the vehicle in the image based on the information, recognize the license plate, and collect a license plate number, to obtain identification information of the vehicle, or the cloud server end can determine information such as an obstacle location or an obstacle size on a road based on the image information.

S420: The cloud server end obtains a first traveling route of the vehicle from a first location to a first parking space in a parking lot based on the image information, where the first parking space is a vacant parking space.

The cloud server end may first obtain the location of the vehicle in the parking lot based on the image information, and then obtain the traveling route from the first location to the first parking space. For ease of description, the vehicle is referred to as a target vehicle, a location of the target vehicle is referred to as the first location, a parking space allocated to the target vehicle is referred to as the first parking space, and the traveling route from the first location to the first parking space is referred to as the first traveling route.

In an example, when the cloud server end obtains the location of the vehicle, if the image information includes the image captured by the camera, the cloud server end may decode and process the image to obtain image information such as the feature of the vehicle and the corner point of the license plate, determine the location of the vehicle in the image based on the information, determine the first location of the vehicle based on a location of the camera, recognize the license plate, and collect the license plate number, to obtain the identification information of the vehicle.

In another example, if the image information includes image information such as the feature of the vehicle and the corner point of the license plate, the cloud server end may determine the location of the vehicle in the image, determine the first location of the vehicle based on a location of the camera, recognize the license plate, and collect the license plate number, to obtain the identification information of the vehicle.

Optionally, in some implementations, an edge server end may be deployed between the camera and the cloud server end in the parking system. In this case, all or some operations of obtaining the image information may be implemented by an edge server, to reduce pressure of the cloud server end.

In an example, when the cloud server end obtains the first traveling route, the cloud server end may obtain a vacant parking space in the parking lot, allocate the first vacant parking space to the vehicle from the vacant parking space, and then obtain the first traveling route from the first location to the first parking space.

For example, a vacant parking space may be randomly allocated to the vehicle. For another example, a vacant parking space closest to the vehicle may be allocated to the vehicle.

In another example, when the cloud server end obtains the first traveling route, the cloud server end may obtain an optimal traveling route between each parking space in the parking lot and an entrance of the parking lot, and sort parking spaces in ascending order of lengths of optimal traveling routes. Each time there is a vehicle traveling to the entrance of the parking lot, the cloud server end sequentially searches for a parking space starting from a 1st parking space in the sorted parking spaces until a vacant parking space is found, uses the 1st found parking space as the first parking space, and uses an optimal traveling route corresponding to the first parking space as the first traveling route. In this embodiment, the optimal traveling route may be a route with a shortest traveling distance.

In still another example, when the cloud server end obtains the first traveling route, a user of the vehicle may input a parking requirement (which may also be referred to as a parking preference) to the cloud server end. In this case, the cloud server end may sort the parking spaces based on both the parking requirement and the length of the optimal traveling route between each parking space and the entrance of the parking lot.

For example, when the parking requirement is to be close to an elevator, the cloud server end may calculate a distance from each parking space to the elevator. For ease of description, the distance is referred to as a walking distance. A weight is allocated to the walking distance, and a weight is allocated to a traveling distance of the optimal traveling route. Then, a weighted sum of the walking distance and the traveling distance is calculated based on the two weights, to obtain a ranking value of each parking space. In this way, the cloud server end can sort the parking spaces based on the ranking value of each parking space.

In this embodiment, to sort the parking spaces by considering both the distance between the parking space and the elevator and a distance between the parking space and an exit, a selection factor C may be allocated to each parking space. A calculation process of the selection factor C is as follows:

$$C = \min_{n}\{0.1 l_{cp_0} + 0.9 l_n\}$$

$l_{cp_0}$ indicates a shortest traveling distance from the entrance $cp_0$ to a parking space, and $l_n$ indicates a shortest walking distance from the elevator $n$ near the exit $cp_0$ to the parking space.

It may be understood that the weights 0.1 and 0.9 in the foregoing formula are merely examples. This is not limited in this application.

In this embodiment, optionally, after the vehicle travels into the parking lot and a road traffic status of the parking lot changes, the cloud server end may update sorting of the parking spaces based on a latest road traffic status of the parking lot. In addition, the cloud server end may further reallocate a parking space to the vehicle based on the latest road traffic status, and obtain an optimal traveling route of the vehicle from a current first location to the newly allocated first parking space, or plan an optimal traveling route of the vehicle from a current first location to the original first parking space.

The following describes an example method for obtaining a shortest traveling route from the first location to any parking space in the parking lot. In the method, optionally, complex behaviors such as opposite parking spaces and making a U-turn may be considered, so that an adjacent control point and a control point on an opposite side of a forward traveling route may be considered when the shortest traveling route is calculated.

Optionally, an obstacle on the road in the parking lot may be learned based on the image captured by the camera, and a range of the road whose traffic is affected is determined based on the obstacle size. For example, it is determined, based on the obstacle size, that a parking space adjacent to a current parking space is unavailable, that the road is impassable in one direction, that the road is impassable in two directions, or the like. Optionally, when the adjacent parking space is unavailable, a status of the current parking space may be determined as unavailable. Therefore, a traveling route between the parking space and the first location may not be obtained.

Optionally, if the road is impassable in one direction, a unidirectional distance between control points configured on an impassable road segment is temporarily set to be infinite. If the road is impassable in two directions, both bidirectional distances between control points configured on an impassable road segment are temporarily set to be infinite.

After obtaining a distance between latest control points in a map, the cloud server end may determine a shortest traveling route from a specified location to the parking space according to the following operations: Step 1: Divide all control points into two sets: a set (denoted as $P$) of points whose shortest path lengths to the entrance $cp_0$ have been determined and a set (denoted as $T$) of points whose shortest path lengths to the entrance $cp_0$ are not determined. Step 2: Add $cp_0$ to the set $P$, where $P(cp_0) = 0$, and add remaining points to the set $T$, where $T(cp_i) = +\infty$. Step 3: Select a point $cp_j$ that is adjacent to a point $cp_i$ in the set $P$ and that is in the set $T$, and update a distance from the point $cp_j$ to the entrance $cp_0$ : $T(cp_j) = \min[T(cp_j), P(cp_i) + l_{ij}]$. Step 4: Compare $T(cp_j)$ corresponding to all points in the set $T$ that are adjacent to $cp_0$, and move an adjacent point corresponding to smallest $T(cp_j)$ to the set $P$. Step 5: If the set $T$ is an empty set, the algorithm stops. If the set $T$ is not an empty set, proceed to step 2. A route finally obtained by sequentially connecting all control points related to $T(cp_j)$ is a shortest traveling route between the specified location and a parking space adjacent to a last control point related to $T(cp_j)$. A shortest traveling route from each control point to the entrance $cp_0$ may be obtained through backtracking.

In this embodiment, if there are a plurality of entrances in the parking lot, the parking spaces need to be sorted for each entrance.

In still another example, when learning that a vehicle enters the parking lot, the cloud server end may first determine parking spaces in a vacant state in the parking lot, and then sort these vacant parking spaces. For a sorting manner, refer to the content in the foregoing example. Then, the cloud server end may allocate a 1st parking space in a sequence to the vehicle as the first parking space.

S430: The cloud server end sends the first traveling route to an automobile enterprise server end, and correspondingly, the automobile enterprise server end receives the first traveling route from the cloud server end.

For example, the cloud server end may determine the identification information, for example, the license plate number, of the vehicle based on the image information, obtain an automobile enterprise to which the vehicle belongs, and finally send the first traveling route to a server end of the automobile enterprise, and indicate the identification information of the vehicle associated with the first traveling route. An example of the identification information of the vehicle is the license plate number.

S440: The automobile enterprise server end sends the first traveling route to a vehicle end, and correspondingly, the vehicle end receives the first traveling route from the automobile enterprise server end.

For example, the automobile enterprise server end may determine, based on the identification information of the vehicle associated with the first traveling route, to send the first traveling route to a vehicle end that has a binding relationship with the identification information.

Optionally, the automobile enterprise server end may also send the first traveling route to a mobile phone end of the user.

S445: The vehicle end controls the vehicle to park based on the first traveling route.

For a vehicle having an AVP function, after receiving the first traveling route, the vehicle end may control the vehicle to travel along the first traveling route.

For the vehicle having the AVP function or a conventional vehicle, after receiving the first traveling route, the vehicle end or the mobile phone end may present the first traveling route to the user on the display, to assist a driver in parking.

In this embodiment, a service in which the cloud server end provides the first traveling route for the vehicle end and the vehicle end controls the vehicle to travel to the first parking space along the first traveling route may be referred to as one-click parking.

In some implementations of this embodiment, optionally, the cloud server end may send the first traveling route to the vehicle end and/or the mobile phone end in another manner instead of sending the first traveling route to the vehicle end and/or the mobile phone end by using the automobile enterprise server end. For example, the cloud server end may send the first traveling route to the vehicle end and/or the mobile phone end by using the edge server or even a roadside unit (RSU).

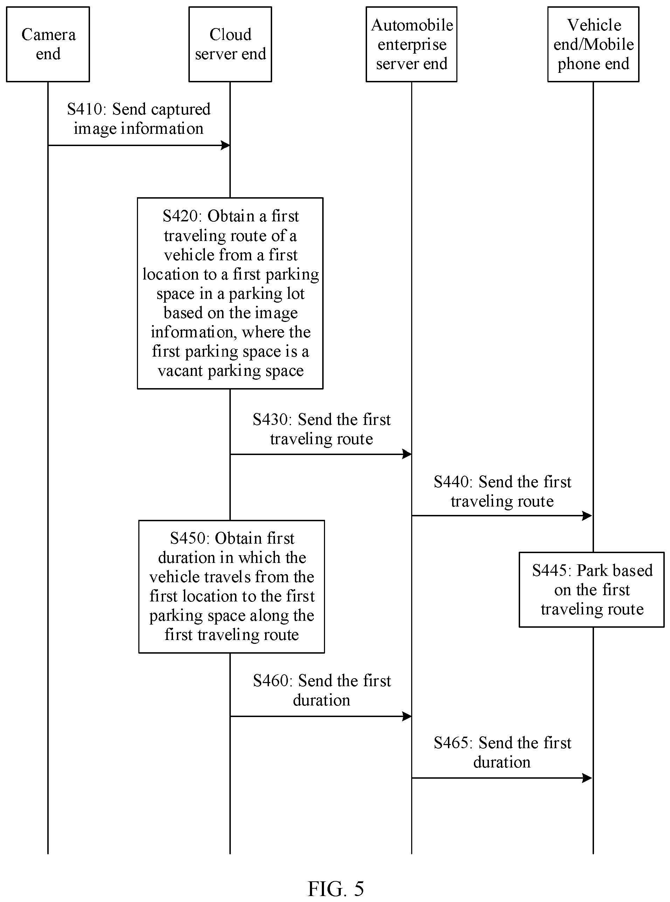

FIG. 5 is a schematic flowchart of an automated valet parking method according to another embodiment of this application. As shown in FIG. 5, the method may further include S450, S460, and S465.

S450: The cloud server end obtains first duration in which the vehicle travels from the first location to the first parking space along the first traveling route.

In an example, it may be assumed that $v_{max}$ indicates a maximum vehicle speed specified for the vehicle, $a$ indicates vehicle acceleration, $L$ indicates a road length, $l_{safe}$ indicates a safe vehicle distance, and $v_j$ indicates an instantaneous speed of a traveling vehicle ahead. In this case, a maximum instantaneous speed of the vehicle on a specific route may be represented as:

$$v_i = \min(v_j, v_{max}, \sqrt{2a(L - l_{safe})})$$

A passing time of the vehicle on a road whose length is L is:

$$t(L, v_{max}) = \begin{cases} 2\sqrt{\dfrac{L}{a}}, & if \ L \le \sqrt{\dfrac{v_i^2}{a}} \\ 2\dfrac{v_i}{a} + \dfrac{L - \sqrt{\dfrac{v_i^2}{a}}}{v_i}, & else \end{cases}$$

Optionally, because the traveling route of the vehicle includes a straight and a bend, the straight and the bend intersect, and the vehicle usually starts and ends on the straight, it may be assumed that $S = \{l_1, b_1, l_2, b_2, \ldots , l_{n-1}, b_{n-1}, l_n\}$ indicates the traveling route of the vehicle, and the first traveling route is divided into a plurality of sub-routes in a form of intersection of the straight and the bend, where $l_i$ indicates a length of the straight, and $b_i$ indicates a length of the bend.

It is assumed that $v_{max}^l$ and $v_{max}^b$ indicate maximum vehicle speeds specified for the vehicle on the straight and the bend respectively, and the first traveling route $S$ is given. In this case, the first duration in which the vehicle travels from the entrance to the first parking space along the first traveling route is:

$$T = \sum_{l_i \in S} t(l_i, v_{max}^l) + \sum_{b_i \in S} t(b_i, v_{max}^b)$$

S460: The cloud server end sends the first duration to the automobile enterprise server end, and correspondingly, the automobile enterprise server end receives the first duration from the cloud server end.

For example, when sending the first traveling route to the automobile enterprise server, the cloud server end may further send the first duration to the automobile enterprise server.

For another example, the cloud server end may obtain the first duration and send the first duration only after receiving a parking duration request sent by the vehicle end or the mobile phone end. The parking duration request may carry the identification information of the vehicle. The cloud server end may obtain the first traveling route of the vehicle corresponding to the identification information, calculate the first duration, determine, based on the identification information, an automobile enterprise to which the vehicle belongs, send the first duration to a server end of the automobile enterprise to which the vehicle belongs, and indicate the identification information of the vehicle associated with the first duration. An example of the identification information of the vehicle is the license plate number.

S465: The automobile enterprise server end sends the first duration to the vehicle end and/or the mobile phone end. The vehicle end and/or the mobile phone end receive/receives the first duration from the automobile enterprise server end.

For example, when sending the first traveling route to the vehicle end and/or the mobile phone end, the automobile enterprise server end also sends the first duration.

For another example, the automobile enterprise server end may determine, based on the identification information of the vehicle associated with the first traveling route, a vehicle end and/or a mobile phone end that have/has a binding relationship with the identification information, and send the first duration to the vehicle end and/or the mobile phone end.

After receiving the first duration, the vehicle end or the mobile phone end may prompt the user with the first duration based on an image, text information, or voice information.

In some implementations of this embodiment, optionally, the cloud server end may send the first duration to the vehicle end and/or the mobile phone end in another manner instead of sending the first duration to the vehicle end and/or the mobile phone end by using the automobile enterprise server end. For example, the cloud server end may send the first duration to the vehicle end and/or the mobile phone end by using the edge server or even the RSU.

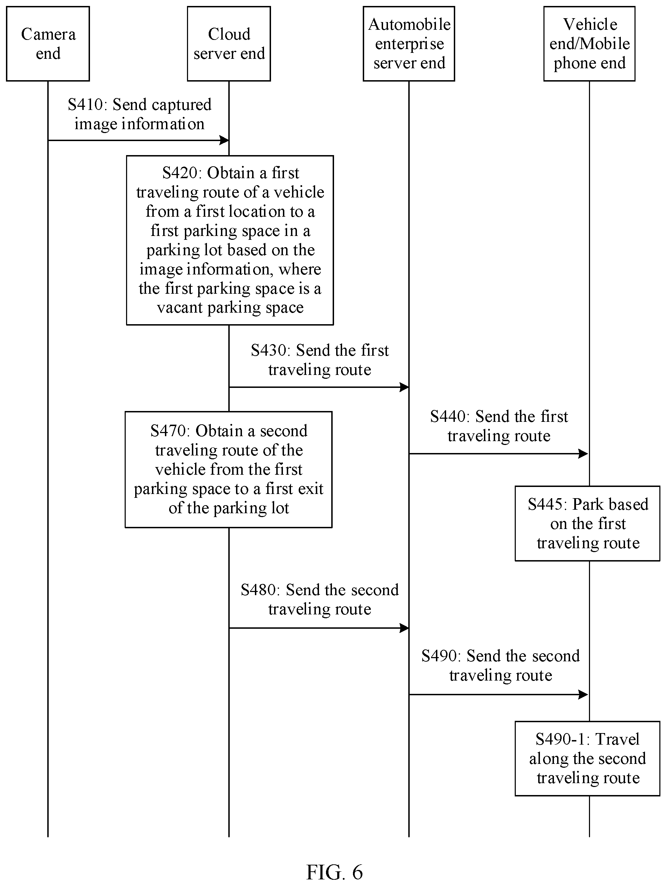

FIG. 6 is a schematic flowchart of a parking method according to another embodiment of this application. As shown in FIG. 6, the method may further include S470, S480, and S490.

S470: The cloud server end obtains a second traveling route of the vehicle from the first parking space to a first exit of the parking lot.

In this embodiment, the first exit may be any exit in the parking lot. The first exit may be an exit that is determined by the cloud server end and that is closest to the first parking space, or may be an exit that is closest to the entrance for the vehicle to enter the parking lot, or may be an exit specified by the vehicle owner user.

In this embodiment, for an implementation of obtaining the second traveling route from the first parking space to the first exit by the cloud server end, refer to the implementation of obtaining the first traveling route from the first location to the first parking space by the cloud server end in the embodiment shown in FIG. 3. For example, the first location in FIG. 3 may be replaced with the first parking space, and the first parking space in the embodiment in FIG. 3 may be replaced with the first exit.

In some implementations of this embodiment, the cloud server end may obtain the second traveling route based on an exit route request sent by the vehicle owner user by using the vehicle end or the mobile phone end. Optionally, the vehicle end and/or the mobile phone end may send the exit route request to the cloud server end by using the automobile enterprise server end, or may send the exit route request in another manner, for example, directly send the exit route request to the cloud server end.

The exit route request may carry the identification information of the vehicle, for example, the license plate number of the vehicle. In this way, after receiving the request, the cloud server end may determine the corresponding vehicle from the parking lot based on the identification information, to plan the second traveling route.

S480: The cloud server end sends the second traveling route to the automobile enterprise server end, and correspondingly, the automobile enterprise server end receives the second traveling route from the cloud server end.

For example, the cloud server end may determine, based on the identification information of the vehicle, an automobile enterprise to which the vehicle belongs, send the second traveling route to a server end of the automobile enterprise, and indicate the identification information of the vehicle associated with the second traveling route. An example of the identification information of the vehicle is the license plate number.

S490: The automobile enterprise server end sends the second traveling route to the vehicle end and/or the mobile phone end, and correspondingly, the vehicle end and/or the mobile phone end receive/receives the second traveling route from the automobile enterprise server end.

For example, the automobile enterprise server end may determine, based on the identification information of the vehicle associated with the second traveling route, to send the second traveling route to a vehicle end and/or a mobile phone end that have/has a binding relationship with the identification information.

S490-1: The vehicle end controls, based on the second traveling route, the vehicle to travel.

After receiving the second traveling route, the vehicle end or the mobile phone end may present the second traveling route to the user on the display. For the vehicle having the AVP function, after receiving the second traveling route, the vehicle end may control the vehicle to travel along the second traveling route.

In this embodiment, a service in which the cloud server end provides the second traveling route for the vehicle end and the vehicle end controls the vehicle to travel to the exit along the second traveling route may be referred to as one-click summoning.

In some implementations of this embodiment, optionally, the cloud server end may send the second traveling route to the vehicle end and/or the mobile phone end in another manner instead of sending the second traveling route to the vehicle end and/or the mobile phone end by using the automobile enterprise server end. For example, the cloud server end may send the second traveling route to the vehicle end and/or the mobile phone end by using the edge server or even the RSU.

Optionally, in this embodiment, after S340 and before S370, S350 and S360 may also be included.

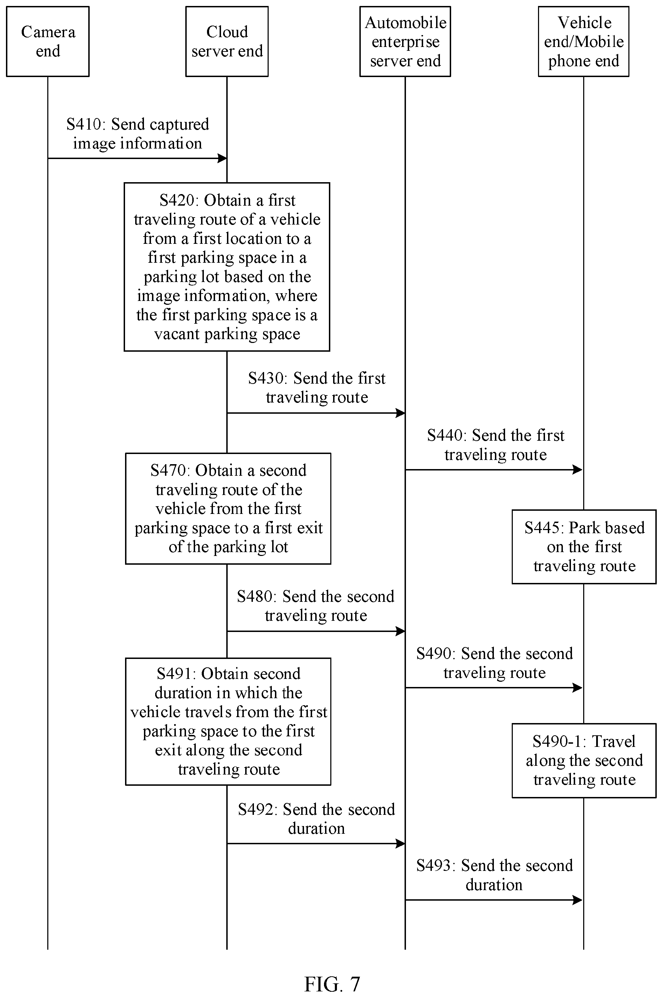

FIG. 7 is a schematic flowchart of a parking method according to another embodiment of this application. As shown in FIG. 7, the method may further include S491, S492, and S493.

S491: The cloud server end obtains second duration in which the vehicle travels from the first parking space to the first exit along the second traveling route.

In an example, for an implementation of obtaining the second duration by the cloud server end, refer to the implementation of obtaining the first duration by the cloud server end. For example, the first traveling route in the embodiment in FIG. 5 may be replaced with the second traveling route.

S492: The cloud server end sends the second duration to the automobile enterprise server end, and correspondingly, the automobile enterprise server end receives the second duration from the cloud server end.

For example, when sending the second traveling route to the automobile enterprise server, the cloud server end may further send the second duration to the automobile enterprise server.

For another example, the cloud server end may obtain the second duration and send the second duration only after receiving an exit duration request sent by the vehicle end or the mobile phone end. The exit duration request may carry the identification information of the vehicle. The cloud server end may obtain the second traveling route of the vehicle corresponding to the identification information, calculate the second duration, determine, based on the identification information, the automobile enterprise to which the vehicle belongs, send the second duration to the server end of the automobile enterprise to which the vehicle belongs, and indicate the identification information of the vehicle associated with the second duration. An example of the identification information of the vehicle is the license plate number.

S493: The automobile enterprise server end sends the second duration to the vehicle end and/or the mobile phone end, and correspondingly, the vehicle end and/or the mobile phone end receive/receives the second duration from the automobile enterprise server end.

For example, when sending the second traveling route to the vehicle end and/or the mobile phone end, the automobile enterprise server end also sends the second duration.

For another example, the automobile enterprise server end may determine, based on the identification information of the vehicle associated with the second traveling route, the vehicle end and/or the mobile phone end that have/has the binding relationship with the identification information, and send the second duration to the vehicle end and/or the mobile phone end.

After receiving the second duration, the vehicle end or the mobile phone end may prompt the user with the second duration based on an image, text information, or voice information.

In some implementations of this embodiment, optionally, the cloud server end may send the second duration to the vehicle end and/or the mobile phone end in another manner instead of sending the second duration to the vehicle end and/or the mobile phone end by using the automobile enterprise server end. For example, the cloud server end may send the second duration to the vehicle end and/or the mobile phone end by using the edge server or even the RSU.

In embodiments of this application, optionally, the cloud server end may further output prompt information such as a safe traveling distance and/or a safe traveling speed to the vehicle end and/or the server end, to facilitate safe driving of the vehicle.

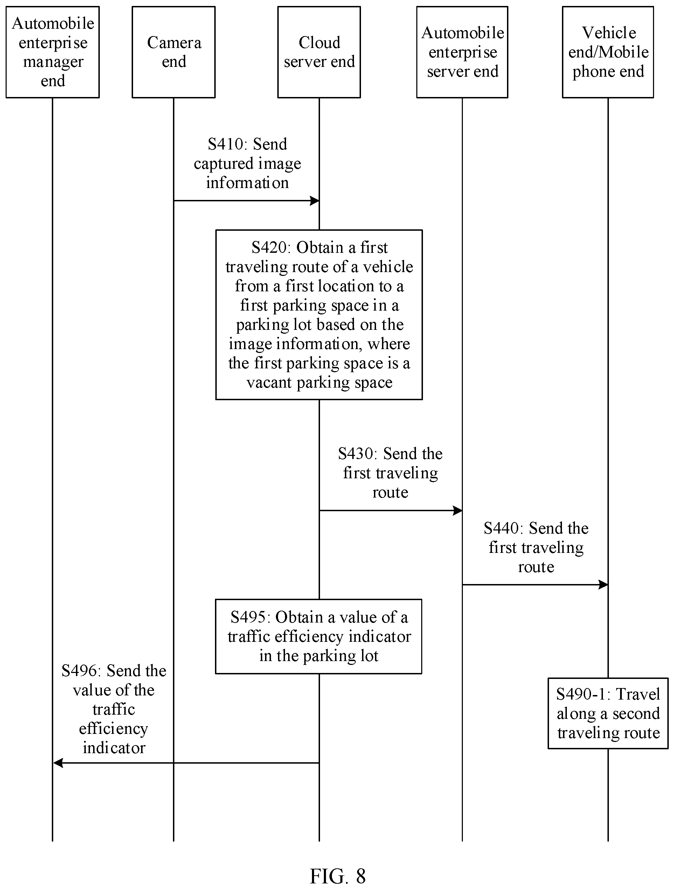

FIG. 8 is a schematic flowchart of a parking method according to another embodiment of this application. As shown in FIG. 8, the method may include S495, S496, and S497.

S495: The cloud server end obtains a value of a traffic efficiency indicator in the parking lot.

For example, the traffic efficiency indicator may include one or more of the following indicators: an average time for finding a parking space, an average detour time, an average congestion and determining time, a total detour distance, a total traveling distance, a quantity of served vehicles, a vehicle service rate, a quantity of vehicles that exit the parking lot with a detour, and a quantity of vehicles that do not enter the parking lot.

The average time for finding a parking space means an average time used by the vehicle for traveling from the entrance to the parking space within specified duration. The average detour time means an average time consumed by a detour behavior of the vehicle in a process of traveling from the entrance to the parking space within specified duration. The average congestion and determining time means an average time consumed by two behaviors of determining, due to congestion and deceleration, whether the parking space is vacant in a process in which the vehicle searches for the parking space within specified duration. The total detour distance means a total detour distance of the vehicle within specified duration. The total traveling distance means a total traveling distance of the vehicle from entering the parking lot to finding the parking space within specified duration. The quantity of served vehicles means a quantity of vehicles that find the parking space within specified duration. The vehicle service rate means a ratio of a quantity of served vehicles within specified duration to a total quantity of arrival vehicles. The quantity of vehicles that exit the parking lot with a detour means a quantity of vehicles that takes a detour of a preset distance but still do not find the parking space within specified duration. The quantity of vehicles that do not enter the parking lot means a quantity of vehicles that exit the parking lot because there is no vacant parking space in the parking lot within specified duration. An example of the preset distance is 700 meters.

In an example, when the vehicle arrives at the entrance of the parking lot, the cloud server end may establish a waiting entry event for the vehicle. When the vehicle enters the entrance of the parking lot, the cloud server end may establish an entry event for the vehicle. When the vehicle travels in the parking lot, the cloud server end may establish a traveling event. When the vehicle starts to enter the parking lot, the cloud server end may establish a pre-parking event for the vehicle. When the vehicle is parked in the parking space, the cloud server end may establish a parking event for the vehicle. When the vehicle starts to travel out of the parking space, the cloud server end establishes a pre-exit event for the vehicle. When the vehicle travels out of the exit of the parking lot, the cloud server end establishes an exit event for the vehicle.

The cloud server end may determine a value of a corresponding indicator in traffic efficiency based on time information between the foregoing events of the vehicle. For example, the total traveling distance of the vehicle may be determined based on a time difference between an occurrence time of the exit event of the vehicle and an occurrence time of the pre-parking event of the vehicle. For another example, the quantity of vehicles that do not enter the parking lot may be determined based on a quantity of waiting entry events and a quantity of entry events.

In this embodiment of this application, optionally, the cloud server end may periodically determine the traffic efficiency indicator in the parking lot.

S496: The cloud server end sends the value of the traffic efficiency indicator to a parking lot manager end, and correspondingly, the parking lot manager end receives the value of the traffic efficiency indicator.

After receiving the value of the traffic efficiency indicator, the parking lot manager end may display the value of the traffic efficiency indicator. For example, the parking lot manager end may display the value of the traffic efficiency indicator on the display in a form of graph, table, text, or the like.

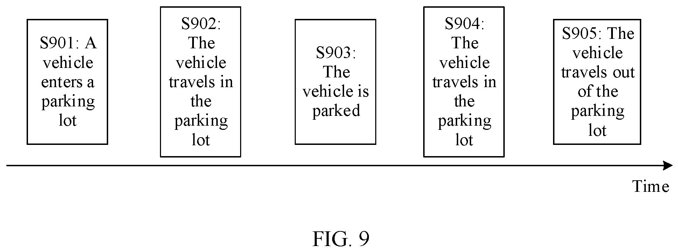

Vehicle event establishment logic according to an embodiment of this application is shown in FIG. 9. FIG. 9 describes the vehicle event establishment logic from a time dimension.

S901: A vehicle enters a parking lot, and a vehicle entry event is generated.

After the vehicle enters the parking lot, a vehicle type is determined. The vehicle type may include a conventional vehicle, an AVP vehicle with single-vehicle intelligence, and a vehicle parked by using the parking method in this application.

Different types of vehicles follow different logic controls to determine a vacant parking space.

For the traditional vehicle, when the vehicle travels to a vacant parking space, the vehicle applies to occupy the parking space. When the parking space is unavailable, the vehicle continues to check whether a parking space on an opposite side (if any) is vacant. If the parking space is vacant, the vehicle goes to the parking space to park. If the parking space on the opposite side is also unavailable, the vehicle may continue to move forward or turn at an intersection. A decision on behaviors of going straight, turning left, and turning right is made based on different selection probabilities (including a user preference and a parking space priority, where a parking space closer to an elevator, an exit, or the like may be preferentially selected in a specific scenario). When a preferred parking space is occupied, the traditional vehicle continues to randomly search for another vacant parking space until the vacant parking space is found.

For the AVP vehicle with single-vehicle intelligence, there is no obvious selection tendency to select a route or parking space. When encountering an intersection, the AVP vehicle with single-vehicle intelligence selects to go straight, turn left, or turn right and moves at a same probability. The AVP vehicle with single-vehicle intelligence is more conservative during traveling, and needs to decelerate at each parking space to check information about the parking space.

For the vehicle that uses the parking method in this application, a first traveling route is sent to the vehicle, so that the vehicle parks based on the first traveling route output in the method according to any one of the foregoing embodiments of this application.

S902: The vehicle travels in the parking lot, and a traveling event is generated.

In other words, for example, the vehicle that uses the parking method in this application travels along the first traveling route.

S903: The vehicle enters a parking space, and a parking event is generated.

In other words, after each vehicle arrives at the parking space, the parking event may be generated.

S904: The vehicle travels in the parking lot, and a traveling event is generated.

For example, when the vehicle is ready to exit the parking lot, the vehicle may travel in the parking lot again.

S905: The vehicle exits the parking lot, and an exit event is generated.

For example, after each vehicle travels out of the exit of the parking lot, the exit event is generated.

It may be understood that the foregoing examples are merely some examples of the parking method provided in this application. The parking method in this application may further include another embodiment.

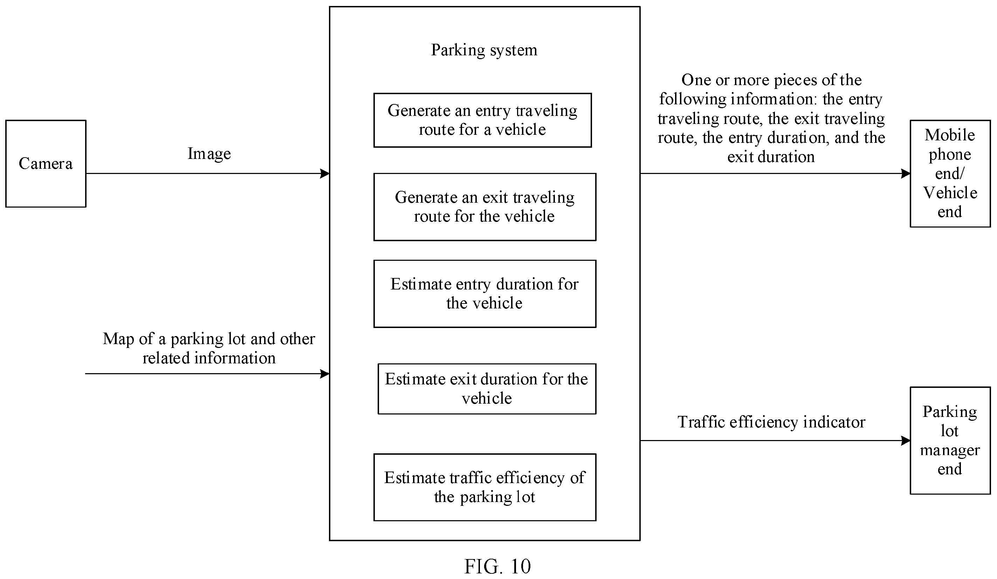

For example, a schematic flowchart of a parking method according to another embodiment of this application is shown as FIG. 10. In the method, a parking system receives an image from a camera, processes the image, and obtains image information. A map of a parking lot and some related information such as a maximum traveling speed and a maximum traveling spacing in the parking lot are preset in the parking system. The parking system may generate an entry traveling route and an exit traveling route for the vehicle and estimate exit duration, entry duration, traffic efficiency, and the like based on the image captured by the camera, the map of the parking lot, and other related information. The parking system may send the entry traveling route, the exit traveling route, the entry duration and/or the exit duration, and the like to a vehicle end and/or a mobile phone end. The parking system may send a traffic efficiency indicator to a parking lot manager end.

In this embodiment of this application, all or some of the operations such as obtaining the image information, generating the entry traveling route, generating the exit traveling route, estimating the exit duration, estimating the entry duration, estimating the traffic efficiency, and sending the entry traveling route, the exit traveling route, the entry duration, the exit duration, and the like to the vehicle end and the mobile phone end may be implemented by a cloud server end, may be implemented by the cloud server end in cooperation with another device (for example, an edge server end), or may be further implemented by a device other than the cloud server end. For a specific implementation of each step, refer to a manner in which the cloud server end is used for implementation.

The foregoing describes the parking methods in some embodiments of this application. The following describes a related parking apparatus provided in embodiments of this application.

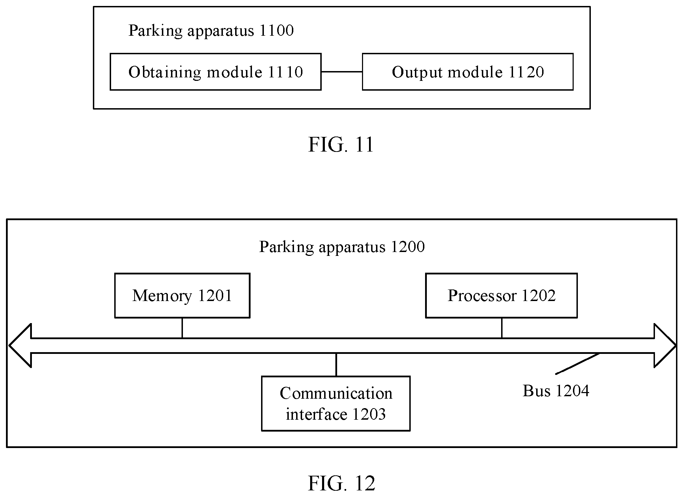

FIG. 11 is a diagram of an example structure of an automated valet parking apparatus according to an embodiment of this application. As shown in FIG. 11, the apparatus 1100 may include an obtaining module 1110 and an output module 1120. The apparatus 1100 may be configured to implement the method shown in any one of FIG. 4 to FIG. 10.

In an example, the apparatus 11 may be configured to implement an operation performed by a cloud server end in the method shown in any one of FIG. 4 to FIG. 8.

For example, the obtaining module 1110 may be configured to implement an operation performed by the cloud server end in S410 and S420, and the output module 1120 may be configured to implement an operation performed by the cloud server end in S430.

Optionally, the obtaining module 1110 may be further configured to implement S450, and the output module 1120 may be further configured to implement an operation performed by the cloud server end in S460.

Optionally, the obtaining module 1110 may be further configured to implement S470, and the output module 1120 may be further configured to implement an operation performed by the cloud server end in S480.

Optionally, the obtaining module 1110 may be further configured to implement S491, and the output module 1120 may be further configured to implement an operation performed by the cloud server end in S492.

Optionally, the obtaining module 1110 may be further configured to implement S495, and the output module 1120 may be further configured to implement an operation performed by the cloud server end in S496.

For another example, the apparatus 1100 may be configured to implement the method that can be implemented by the parking system shown in FIG. 10.

In an example, the apparatus 1100 may be deployed on a cloud, or may be deployed on a parking lot end.

FIG. 12 is a diagram of an example structure of a parking apparatus according to an embodiment of this application. As shown in FIG. 12, the apparatus 1200 in this embodiment includes: a memory 1201, a processor 1202, a communication interface 1203, and a bus 1204. The memory 1201, the processor 1202, and the communication interface 1203 implement communication connection between each other through the bus 1204.

The memory 1201 may be a read-only memory (read-only memory, ROM), a static storage device, a dynamic storage device, or a random access memory (random access memory, RAM). The memory 1201 may store a program. When the program stored in the memory 1201 is executed by the processor 1202, the processor 1202 is configured to perform the method shown in any one of FIG. 4 to FIG. 10, or is configured to perform an operation implemented by the cloud server end in the method shown in any one of FIG. 4 to FIG. 10.

The processor 1202 may be a general-purpose central processing unit (central processing unit, CPU), a microprocessor, an application-specific integrated circuit (application-specific integrated circuit, ASIC), or one or more integrated circuits, and is configured to execute a related program.

The processor 1202 may alternatively be an integrated circuit chip and has a signal processing capability. In an implementation process, the related steps in embodiments of this application may be completed by using an integrated logic circuit of hardware in the processor 1202 or instructions in a form of software.

The processor 1202 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or transistor logic device, or a discrete hardware component. The processor 1202 may implement or perform the methods, the steps, and logical block diagrams that are disclosed in embodiments of this application. The general-purpose processor may be a microprocessor, or the processor may be any conventional processor or the like.

The steps of the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1201. The processor 1202 reads information in the memory 1201, and completes, based on hardware of the processor 1202, functions that need to be performed by the units included in the apparatus in this application.

The communication interface 1203 may use, but is not limited to, a transceiver apparatus such as a transceiver, to implement communication between the apparatus 1200 and another device or a communication network.

The bus 1204 may include a path for transmitting information between components (for example, the memory 1201, the processor 1202, and the communication interface 1203) of the apparatus 1200.

It should be understood that the apparatus 1200 shown in this embodiment of this application may be a cloud server end, or may be a chip configured in the cloud server end.

Some embodiments of this application further provide an automated valet parking system. The system may include at least one of the camera end, the cloud server end, the vehicle end, the automobile enterprise end, and the mobile phone end in FIG. 1.

Some embodiments of this application further provide a computer program product, for example, a lane line detection application or a camera parameter calibration application. When the computer program product runs on a processor, the method implemented by a vehicle-mounted device in any one of the foregoing embodiments may be implemented. Some embodiments of this application further provide a computer-readable storage medium. The computer-readable storage medium includes computer instructions. When the computer instructions are run on a processor, the method implemented by a vehicle-mounted device in any one of the foregoing embodiments may be implemented.

It should be noted that the modules or components in the foregoing embodiments may be configured as one or more integrated circuits for implementing the foregoing methods, for example, one or more application-specific integrated circuits (application-specific integrated circuits, ASICs), one or more microprocessors (digital signal processors, DSPs), or one or more field programmable gate arrays (field programmable gate arrays, FPGAs). For another example, when one of the foregoing modules is implemented in a form of scheduling program code by a processing element, the processing element may be a general-purpose processor, for example, a central processing unit (central processing unit, CPU) or another processor, for example, a controller, that can invoke the program code. For another example, these modules may be integrated and implemented in a form of system-on-a-chip (system-on-a-chip, SoC).

All or some of the foregoing embodiments may be implemented by using software, hardware, firmware, software module, or any combination thereof. When the software is used to implement embodiments, all or some of the foregoing embodiments may be implemented in a form of computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

The term "a plurality of" in this specification means two or more. The term "and/or" in this specification describes only an association relationship for describing associated objects and indicates that three relationships may exist. For example, A and/or B may indicate the following three cases: Only A exists, both A and B exist, and only B exists. In addition, the character "/" in this specification usually indicates an "or" relationship between associated objects, and the character "/" in a formula usually indicates a "division" relationship between the associated objects. In addition, it should be understood that, in the description of this application, terms such as "first" and "second" are merely used for distinguishing and description, but should not be understood as indicating or implying relative importance, or should not be understood as indicating or implying a sequence.

It may be understood that various numbers in embodiments of this application are merely used for differentiation for ease of description, and are not used to limit the scope of embodiments of this application.

It may be understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

## Claims

1. A method for automated valet parking in a parking lot, comprising:

   obtaining a first traveling route of a target vehicle from a first location to a first parking space in the parking lot, wherein the first parking space is a vacant parking space; and
   controlling, based on the first traveling route, the target vehicle to park from the first location into the first parking space.

2. The method according to claim 1, wherein the method further comprises:

   obtaining an image captured by a camera deployed in the parking lot; and
   determining the first location based on a location of the camera in the parking lot and a location of the target vehicle in the image.

3. The method according to claim 1 or 2, wherein a traveling distance of the first traveling route is a minimum traveling distance from the first location to the first parking space.

4. The method according to any one of claims 1 to 3, wherein the method further comprises:

   receiving a parking requirement that is input by a user; and
   determining a location that is in the parking lot and that meets the parking requirement as a destination; and
   the obtaining a first traveling route of a target vehicle from a first location to a first parking space in the parking lot comprises:
   obtaining the first traveling route based on the destination, wherein a sum of the traveling distance of the first traveling route and a walking distance from the first parking space to the destination is less than a traveling distance from the first location to the destination through any vacant parking space in the parking lot.

5. The method according to claim 4, wherein the sum is a weighted sum of the traveling distance of the first traveling route and the walking distance, and a weight of the traveling distance of the first traveling route and a weight of the walking distance are preset values.

6. The method according to any one of claims 1 to 5, wherein the method further comprises:

    obtaining first duration in which the target vehicle travels from the first location to the first parking space along the first traveling route; and outputting the first duration to the user.

7. The method according to claim 6, wherein the obtaining first duration in which the target vehicle travels from the first location to the first parking space along the first traveling route comprises:

    dividing the first traveling route into S subroutes, wherein S is a positive integer; obtaining sub-duration in which the target vehicle travels along each of the S sub-routes; and determining the first duration based on the subduration in which the target vehicle travels along each of the S sub-routes.

8. The method according to claim 7, wherein the obtaining sub-duration in which the target vehicle travels along each of the S sub-routes comprises:

    obtaining a maximum instantaneous speed of the target vehicle on each sub-route; and determining, based on a length of each subroute, the maximum instantaneous speed of the target vehicle on each sub-route, an instantaneous speed of a traveling vehicle ahead of the target vehicle traveling along each subroute, a safe traveling distance in the parking lot, and vehicle acceleration in the parking lot, the sub-duration in which the target vehicle travels along each sub-route.

9. The method according to any one of claims 1 to 8, wherein the method further comprises:

    obtaining a second traveling route from the first parking space to a first exit of the parking lot; and controlling, based on the second traveling route, the vehicle to travel from the first parking space to the first exit.

10. The method according to claim 9, wherein the method further comprises:

    obtaining second duration in which the vehicle travels from the first parking space to the first exit along the second traveling route; and outputting the second duration to the user.

11. The method according to any one of claims 1 to 10, wherein the method further comprises:
determining that traffic efficiency of the parking lot is greater than or equal to a traffic efficiency threshold.

12. The method according to claim 11, wherein the determining that traffic efficiency of the parking lot is greater than or equal to a traffic efficiency threshold comprises:
when an occupancy rate of the parking lot is greater than or equal to a preset threshold, determining that the traffic efficiency of the parking lot is greater than or equal to the traffic efficiency threshold.

13. The method according to claim 11 or 12, wherein the method further comprises:

    obtaining a value of at least one of the following indicators: an average time for finding a parking space, an average detour time, an average congestion and determining time, a total detour distance, a total traveling distance, a quantity of served vehicles, a vehicle service rate, a quantity of vehicles that exit the parking lot with a detour, and a quantity of vehicles that do not enter the parking lot; and outputting the value of the at least one indicator to a manager of the parking lot.

14. The method according to any one of claims 1 to 13, wherein the method further comprises:

    obtaining a safe traveling speed and/or a safe traveling spacing in the parking lot, wherein the controlling, based on the first traveling route, the vehicle to park from the first location into the first parking space comprises:
    controlling, based on the first traveling route and the safe traveling speed and/or the safe traveling spacing, the vehicle to park from the first location into the first parking space.

15. A parking apparatus in a parking lot, wherein the apparatus comprises modules configured to implement the method according to any one of claims 1 to 14.

16. A parking apparatus in a parking lot, comprising a processor and a memory that is communicatively connected to the processor, wherein

the memory stores computer-executable instructions; and

the processor executes the computer-executable instructions stored in the memory, to implement the method according to any one of claims 1 to 14.

17. A vehicle, wherein the vehicle comprises the parking apparatus according to claim 15 or 16.

18. A computer-readable storage medium, wherein the computer-readable storage medium stores computer-executable instructions, and when the computer-executable instructions are executed by a processor, the method according to any one of claims 1 to 14 is implemented.

19. A computer program product, comprising a computer program or instructions, wherein when the computer program or the instructions are executed by a processor, the method according to any one of claims 1 to 14 is implemented.

FIG. 1

FIG. 2

Entrance

Exit

FIG. 3

| Camera end | Cloud server end | Automobile enterprise server end | Vehicle end |

S410: Send captured image information

S420: Obtain a first traveling route of a vehicle from a first location to a first parking space in a parking lot based on the image information, where the first parking space is a vacant parking space

S430: Send the first traveling route

S440: Send the first traveling route

S445: Park based on the first traveling route

FIG. 4

FIG. 5

FIG. 6

| Camera end | Cloud server end | Automobile enterprise server end | Vehicle end/Mobile phone end |
|---|---|---|---|

S410: Send captured image information →

S420: Obtain a first traveling route of a vehicle from a first location to a first parking space in a parking lot based on the image information, where the first parking space is a vacant parking space

S430: Send the first traveling route →

S440: Send the first traveling route →

S470: Obtain a second traveling route of the vehicle from the first parking space to a first exit of the parking lot

S445: Park based on the first traveling route

S480: Send the second traveling route →

S490: Send the second traveling route →

S491: Obtain second duration in which the vehicle travels from the first parking space to the first exit along the second traveling route

S490-1: Travel along the second traveling route

S492: Send the second duration →

S493: Send the second duration →

FIG. 7

| Automobile enterprise manager end | Camera end | Cloud server end | Automobile enterprise server end | Vehicle end/Mobile phone end |
|---|---|---|---|---|

S410: Send captured image information

S420: Obtain a first traveling route of a vehicle from a first location to a first parking space in a parking lot based on the image information, where the first parking space is a vacant parking space

S430: Send the first traveling route

S440: Send the first traveling route

S495: Obtain a value of a traffic efficiency indicator in the parking lot

S496: Send the value of the traffic efficiency indicator

S490-1: Travel along a second traveling route

FIG. 8

| S901: A vehicle enters a parking lot | | S902: The vehicle travels in the parking lot | | S903: The vehicle is parked | | S904: The vehicle travels in the parking lot | | S905: The vehicle travels out of the parking lot |

Time

FIG. 9

Camera

Image

Parking system

Generate an entry traveling route for a vehicle

Generate an exit traveling route for the vehicle

Estimate entry duration for the vehicle

Estimate exit duration for the vehicle

Estimate traffic efficiency of the parking lot

Map of a parking lot and other related information

One or more pieces of the following information: the entry traveling route, the exit traveling route, the entry duration, and the exit duration

Mobile phone end/ Vehicle end

Traffic efficiency indicator

Parking lot manager end

FIG. 10

Parking apparatus 1100

| Obtaining module 1110 | Output module 1120 |

FIG. 11

Parking apparatus 1200

Memory 1201

Processor 1202

Communication
interface 1203

Bus 1204

FIG. 12

## INTERNATIONAL SEARCH REPORT

| International application No. |
| --- |
| **PCT/CN2023/104210** |

### A. CLASSIFICATION OF SUBJECT MATTER

G08G1/14(2006.01)i

According to International Patent Classification (IPC) or to both national classification and IPC

### B. FIELDS SEARCHED

Minimum documentation searched (classification system followed by classification symbols)

IPC: G08G G05D B60W

Documentation searched other than minimum documentation to the extent that such documents are included in the fields searched

Electronic data base consulted during the international search (name of data base and, where practicable, search terms used)

CNTXT; ENTXT; ENTXTC; CJFD: 停车场, 泊车, 位置, 路线, 摄像, 图像, 距离, 时长, 效率, 占位, 空闲, 速度, park+, position, route, camera, picture, distance, duration, efficiency, placeholder, idle, speed

### C. DOCUMENTS CONSIDERED TO BE RELEVANT

| Category* | Citation of document, with indication, where appropriate, of the relevant passages | Relevant to claim No. |
| --- | --- | --- |
| X | CN 114415692 A (ALIBABA (CHINA) CO., LTD.) 29 April 2022 (2022-04-29) description, paragraphs 51-207, and figures 1-9 | 1-19 |
| X | CN 114228702 A (JIANGLING MOTORS CO., LTD.) 25 March 2022 (2022-03-25) description, paragraphs 55-134, and figures 1-3 | 1-3, 15-19 |
| X | CN 115223388 A (GUANGDONG INDUSTRY POLYTECHNIC) 21 October 2022 (2022-10-21) description, paragraphs 58-127, and figures 1-7 | 1, 3, 15-19 |
| X | WO 2016128203 A1 (ROBERT BOSCH GMBH) 18 August 2016 (2016-08-18) claims, and figures 1-2 | 1-3, 15-19 |
| X | KR 20070120681 A (MIGHTYWORKS) 26 December 2007 (2007-12-26) claims, and figures 1-4 | 1, 3, 15-19 |
| X | DE 102017216847 A1 (AUDI AG.) 28 March 2019 (2019-03-28) claims, and figures 1-5 | 1, 15-19 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **27 September 2023** | **28 September 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT

Information on patent family members

International application No.

**PCT/CN2023/104210**

| Patent document cited in search report | | | Publication date (day/month/year) | Patent family member(s) | | | Publication date (day/month/year) |
|---|---|---|---|---|---|---|---|
| CN | 114415692 | A | 29 April 2022 | None | | | |
| CN | 114228702 | A | 25 March 2022 | None | | | |
| CN | 115223388 | A | 21 October 2022 | None | | | |
| WO | 2016128203 | A1 | 18 August 2016 | DE | 102015202482 | A1 | 18 August 2016 |
| | | | | EP | 3256365 | A1 | 20 December 2017 |
| | | | | EP | 3256365 | B1 | 24 July 2019 |
| KR | 20070120681 | A | 26 December 2007 | None | | | |
| DE | 102017216847 | A1 | 28 March 2019 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211521349